# EUROPEAN PATENT APPLICATION

(11) **EP 1 080 632 A2**
(43) Date of publication of application: **07.03.2001**
(21) Application number: 00660144.7
(22) Date of filing: 30.08.2000
(51) Int. Cl.: A01G 31/02

(54) **Method of cultivating plants**

(30) Priority: 03.09.1999 FI 991885
(71) Applicant: Masus, Henrik, 66270 Pörtom (FI)
(72) Inventor: Lind, Felix, 66270 Pörtom (FI)
(74) Representative: Niemi, Hakan

(57) **Abstract**

The present invention relates to a method of cultivating various plants, preferably cucumber plants. Cultivated small plants (6) are in accordance with the method placed in mineral wool blocks (10). The mineral wool blocks are in turn placed in planting pots (5) arranged in plant tables (1) known per se. The mineral wool blocks are heated using a heat source (2) advantageously arranged beneath the plant table, so that the plant table and the heat source are substantially surrounded with a foil material (7). After arranging the planting pots in gaps (4) on the upper surface of the plant table, irrigation means (9) and heat control means (11) are arranged into the planting pot in order to provide the best possible growing conditions for the small plants particularly by arranging the heat control means to control the heat source so that the mineral wool block shows a temperature set in advance that is favourable for the root system of the plant.

## Description

### FIELD OF THE INVENTION

The present invention relates to a method of cultivating plants according to the preamble in claim 1. The method relates to cultivating cucumber plants in particular, but may also be advantageously used for cultivating tomato plants, for example. The invention also relates to an arrangement for cultivating plants and to a pot to be used for such a cultivation.

### BACKGROUND OF THE INVENTION

When cultivating cucumber and tomato plants in greenhouses, it is common during the first cultivation stage to sow seeds in what are known as seed carpets in order to transfer the small plants sprouted from the seeds into a pot or a plant block during the following cultivation stage. These small plants in pots or plant blocks are then lined up on long stationary tables or on what are known as roller tables in which the plants can be removed along stationary stands. The small plants are cultivated on these tables until they have developed sufficiently to be forwarded for sales and/or for a final planting. The plant blocks used for cultivation can preferably be composed of prefabricated mineral wool blocks.

Particularly when cultivating small plants in the mineral wool blocks a disadvantageous temperature drop arises in the mineral wool block owing to an abundant liquid vaporization that is common in such blocks. The mineral wool block generally has a temperature that is approximately 2°C below the surrounding air temperature in the greenhouse. Such a difference in temperature results in disadvantageous conditions regarding the root system of the plant and has a disadvantageous effect on the development of the plant in general. Since the roots require a temperature of 22 to 23°C in order to develop, for example when cultivating cucumber plants, the surrounding temperature must therefore be kept at 24 to 25°C in order to maintain a sufficient temperature level at the root system of the plant. If the surrounding temperature of the plant is approximately 24 to 25°C the plant runs a risk of being lanky, in which case the plant also becomes difficult to handle and can be easily damaged for example during transportation or planting.

There are currently no reliable methods for cultivating plants which would guarantee a higher temperature than the general greenhouse temperature in the mineral wool blocks used as a substrate.

### BRIEF DESCRIPTION OF THE INVENTION

The present invention avoids the problems of the known solutions. Thus, the method of the invention is able to provide growth conditions that on one hand guarantee an appropriate root temperature for the planted small plant and on the other hand at the same time ensure the plant a favourable development to a high-class plant.

The solution to the above problem is obtained, as the present invention comprises the characteristics described in the claims. The method of the present invention is particularly characterized in what is disclosed in the characterizing part of claim 1. An arrangement for implementing the method of the present invention is disclosed in the characterizing part of claim 3.

A particularly advantageous result is achieved during cultivation by employing a pot disclosed in the characterizing part of claim 6.

In the present invention a plant table principally indicates a particular arrangement for simultaneously supporting a plurality of pots with plants arranged therein. Such plant tables have generally no legs, and are instead supported by particular stands or by other benches or tables arranged in the space.

During cultivation a seed is at first developed into a sprout. When such a sprout has grown somewhat and has two seed-leaves, the plant is referred to as a small plant. In the following a plant refers to a plant which after a cultivation process is ready to be sold and finally to be planted.

A planting pot preferably refers to a dish made of a plastic material in which plant blocks can be placed for cultivating small plants into plants which are ready to be planted.

Several advantages can be achieved with the method of the present invention in comparison with prior art. Of particular importance is the possibility to be able to reliably guarantee and to continuously maintain the correct temperature in a mineral wool block used during cultivation and thus ensure the best possible development for the root system of the plant.

The use of previously known plant tables significantly reduces the risk of bacteria concentrations, whereby the cultivation always provides the best possible healthy plants.

By continuously observing the temperature conditions of the planting block, the best possible growing conditions can be provided for the development of the plant during the entire cultivation process. In such a case an advantageous reduction of the cycle period can be achieved during cultivation.

The cultivation method of the present invention also provides a better developed root system than the one provided for the plants cultivated using prior art methods. Such a well developed root system guarantees that the plant is rapidly rooted during planting, in which case it is expected that the plant can produce a crop at an earlier stage than the plants cultivated using prior art methods.

### BRIEF DESCRIPTION OF THE DRAWINGS

In the following the invention will be described in greater detail with reference to a preferred embodiment shown in the accompanying drawing, in which
Figure 1 schematically shows an arrangement for cultivating plants,
Figure 2 is a top view showing the arrangement of the invention,
Figure 3 is a detailed view showing the arrangement according to Figure 1,
Figure 4 is a crosscut showing a pot according to the present invention,
Figure 5 is a top view showing the pot according to Figure 4, and
Figure 6 shows a small plant arranged into the pot according to Figure 4.

### DETAILED DESCRIPTION OF THE INVENTION

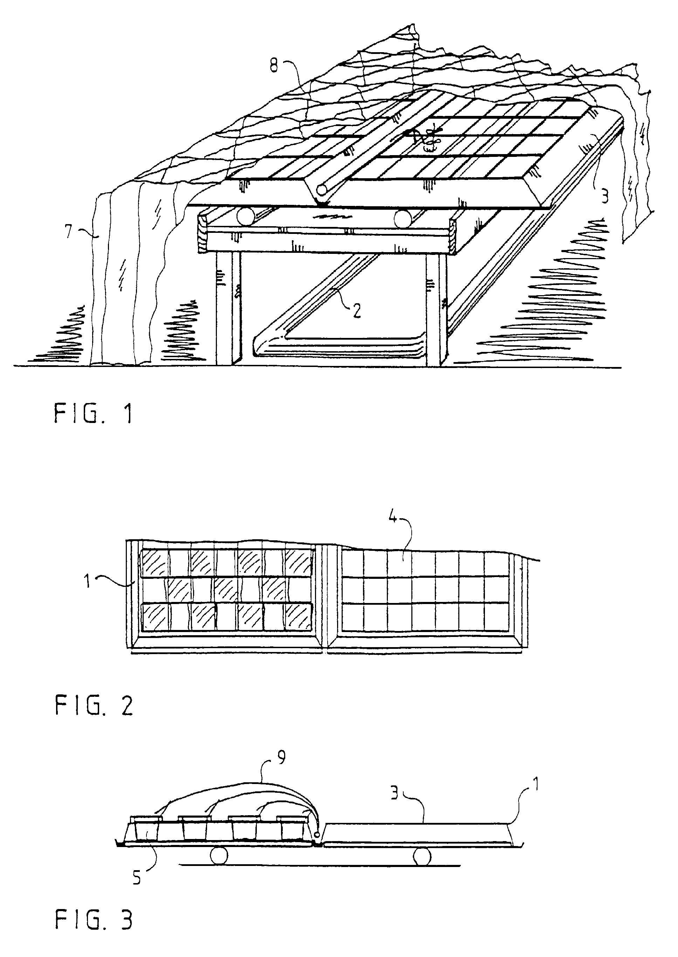

A method for cultivating plants according to the present invention preferably utilizes an arrangement according to the accompanying figures. A larger amount of plants is generally cultivated in greenhouses. Here the arrangement comprises a plant table 1 known per se, which is advantageously arranged above a heat source 2. Such a heat source may comprise, for example, horizontally arranged longitudinal heating pipes placed at an optional height, for instance, in the vicinity of the floor area of the greenhouse. The plant table comprises an upper side 3 provided with gaps 4 arranged to receive planting pots 5 with small plants 6 arranged therein. The plant table may be a specific removable frame construction provided for this purpose with a network of grating threads forming the gaps in order to receive the planting pots according to Figure 1. The plant table can nevertheless also be a substantially fixed construction arranged to receive the pots, however, so that a relatively free flow of air is obtained between the heat source included in the arrangement and the bottom sides of the pots arranged in the plant table.

In order to utilize the heat source 2 to best possible effect, a heat retaining space, i.e. a heat tunnel preferably closed at both ends, is constructed to surround or adjoin both the heat source and the plant table 1. Such a heat tunnel is created by extending a foil material 7, such as a plastic sheeting, over the plant table and down to the floor area along the long sides and the short sides of the supporting construction, on top of which one or more plant tables are arranged. A space is thus formed that substantially includes the heat source and the planting pots arranged into the gaps 4 included in the plant table. It is also possible to place the heat source in the vicinity of the plant table, in which case the foil material is advantageously arranged to substantially encircle both the heat source and the plant table.

In order to simplify the use of the arrangement of the present invention the foil-covered plant table 1 is generally provided in advance with planting pots 5 for receiving the small plants 6. The planting pots are arranged, for example, in every second gap 4 in the plant table, in which case the foil material 7 is cut 8 at the gap in order to allow the pot to be placed into the gap. As the small plants are not planted more densely than to every other gap, the plant is guaranteed favourable growth conditions with an optimal amount of space and light.

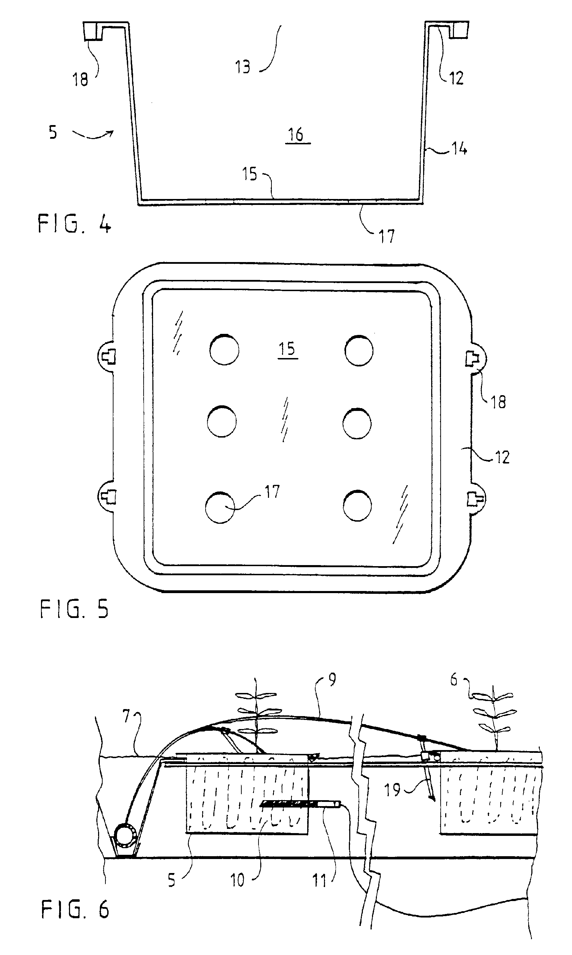

Irrigation means 9 arranged to provide the small plant 6 with nutrient substances and water are according to Figure 6 substantially fixedly installed in the planting pots arranged in the plant table 1. In this way the irrigation means are always correctly directed, at the same time as both placing and removal of plants are simplified.

The method of the invention comprises the following steps. Seeds are cultivated into small plants 6 in a manner known per se, preferably in prefabricated block plates of mineral wool. When the seeds sprout and reach a sufficient size, the small plants obtained are placed in larger, likewise advantageously prefabricated, mineral wool blocks 10. These mineral wool blocks are in turn arranged in one of the planting pots 5 arranged in the gaps 4 on the upper surface 3 of the plant table 1. The plant table and the heat source 2 preferably placed beneath the table and arranged to heat the plant table have previously been substantially encircled by a foil material 7 in order to create a heat retaining space for the planting pots.

In order to provide the small plants 6 with optimal growth conditions, irrigation means 9 are arranged for the small plants, to which particular heat control means 11 are arranged in accordance with Figure 6 for at least one mineral wool block 10 for controlling the heat in the heat retaining space. Consequently the moisture conditions in the mineral wool blocks can be controlled at the same time as the mineral wool blocks continuously show a temperature set in advance in relation to the temperature surrounding the plant. The heat control means are preferably connected to a particular automatic control unit, for example a computer, with coupling means and are preferably arranged to the mineral wool blocks inside the heat tunnel.

A desired cultivation temperature can be obtained, for example 22-23 °C, when cultivating cucumber plants, by constantly controlling the temperature in the mineral wool blocks using the heat control means,. The surrounding temperature in the greenhouse is then controlled by another control unit and may advantageously be 2-3 °C beneath the temperature in the mineral wool block. An energy saving is thus obtained as a side-effect to the present invention. Such a saving is significant during the winter period of the year.

To facilitate the cultivation of plants, the planting pots 5 according to the present invention are continuously arranged into the gaps 4 on the upper side 3 of the plant table 1. Such a planting pot comprises a flange 12 surrounding an opening 13 in the pot. Side walls 14 are arranged to the flange. The side walls are bound together at the end lying opposite to the flange by a bottom 15. These side walls and the bottom are substantially vertically arranged to the flange and include a planting space 16 of the pot. The bottom of the pot preferably also comprises one or more through-cut holes 17 for draining the pot and heating the mineral wool blocks 10 therein. By providing the through-cut holes with a relatively large area in relation to the bottom area of the pot, the heated air circulates in the heat retaining space through the openings and thus conveys more effective heat to the mineral wool block placed in the planting space.

In the preferable solution of the invention the side walls 14 of the planting pot taper towards the bottom 15, thus forming a truncated square pyramid according to Figures 4 and 5. However, the method of the present invention is not in anyway restricted to such a pot form, but cylindrical, cubic as well as other corresponding pots can also be used.

In order to facilitate the placing and removal of the mineral wool blocks 10 in the planting pot 5, the irrigation means 9 are preferably continuously arranged to means 18 included in the flange 12 of the pot. In accordance with the preferred embodiment shown in Figure 5 four such means are arranged to receive supporting legs 19 of the irrigation means, placed into the flange, two on each side of the pot. However, the number of means may be lower or higher and they can be placed on the same or different sides of the pot. If a plant table 1 provided with grating threads according to Figure 1 is used, the means are arranged to receive one of the supporting legs in the irrigation means preferably arranged to lie outside the grating threads in relation to the side wall of the pot according to Figure 6. The means may also comprise an arrangement extending above the flange, in which case the means is not dependent upon the form of the supporting edge at the gap of the plant table.

No extra insulating slit is formed as the planting pot 5 is formed so that it fits tightly against the mineral wool block, and the heat transfer from the heat tunnel to the mineral wool block is carried out unimpededly.

The specification and the figures therein are merely intended to illustrate the present invention. The invention is therefore not restricted to the embodiment described above or in the attached claims but a number of variations or alternative embodiments can be carried out within the scope of the inventive idea which is described in the attached claims.

## Claims

1. A method of cultivating plants where one or more small plants (6) cultivated and planted in mineral wool blocks (10) are placed in planting pots (5) arranged in gaps (4) on an upper surface (3) of one or more plant tables (1), whereafter irrigation means (9) are arranged to the small plant and the plant table is heated using a heating source (2) beneath the plant table, whereby a foil material (7) is arranged to create a heat retaining space between the heat source (2) and the plant table for heating the small plants, **characterized** in that
- heat control means (11) are arranged into at least one planting pot, and
- each heat control means is connected to a control unit which continuously observes the temperature of the mineral wool block (10), whereby
- the function of the heat source (2) is constantly controlled so that the mineral wool block (10) shows a temperature set in advance which preferably exceeds the temperature that otherwise surrounds the plant, simultaneously as
- the automatic control unit co-operates with another control unit arranged to observe and to continuously control the temperature that surrounds the plant.

2. A method as claimed in claim 1, **characterized** in that the control unit arranged to control the heat source compares the temperature of the mineral wool block with information about the temperature that otherwise surrounds the plant obtained from the other control unit, whereafter the temperature otherwise surrounding the plant is adjusted to be 2-3 °C lower than the one in the mineral wool block.

3. A method as claimed in claim 1 or 2, **characterized** in that the plant table (1) placed above the heat source (2) is encircled with a foil material (7) that substantially surrounds the heat source and the plant table in order to create a heat retaining space.

4. An arrangement for cultivating plants according to the method in claim 1, the arrangement comprising a plant table (1), an upper surface (3) of which including gaps (4) for receiving planting pots (5), where irrigation means (9) are arranged into the planting pots for directing water and nutrient substances to a small plant (6) arranged in the planting pot, and the arrangement comprising a heat retaining space formed of a foil material (7) between a heat source (2) lying beneath the plant table and the plant table for heating the small plants (6), **characterized** in that
- the arrangement includes at least one heat control means (11) arranged into at least one mineral wool block placed in a planting pot for controlling the heat source, whereby
- the heat control means is connected to an automatic control unit for controlling the function of the heat source (2) in collaboration with another control unit arranged to observe the temperature that otherwise surrounds the plant.

5. An arrangement as claimed in claim 3, **characterized** in that the foil material (7) is arranged to substantially encircle the heat source (2) and the plant table (1).

6. An arrangement as claimed in claim 4, **characterized** in that the automatic control unit for controlling the function of the heat source (2) is a computer.

7. A planting pot (5) for cultivating a plant, preferably a cucumber plant, in the arrangement according to claim 3, **characterized** in that the planting pot (5) comprises a flange (12) with tapering side walls (14) extending substantially vertically therefrom and a bottom (15) binding the side walls together, the bottom comprising one or more cut-through holes (17) attending to draining and heat transfer in the planting pot, the flange further comprising means (18) for receiving one of the supporting legs (19) in the irrigation means (9).

8. A planting pot (5) as claimed in claim 6, **characterized** in that the planting pot (5) has a substantially truncated square pyramid shape.

9. A planting pot (5) as claimed in claim 6 or 7, **characterized** in that the means (18) for receiving one of the supporting legs (19) in the irrigation means (9) is arranged to lie outside a supporting edge by a gap (4) of the plant table (1).

10. A planting pot (5) as claimed in any one of claims 6 to 8, **characterized** in that the planting pot (5) comprises a volume adapted to receive the mineral wool blocks (10) used for cultivating plants.
